# NEUE EUROPÄISCHE PATENTSCHRIFT

(11) **EP 0 849 038 B3**
(45) Veröffentlichungstag dieser Patentschrift: **30.07.2008**
(45) Hinweis auf die Patenterteilung: 23.04.2003
(21) Anmeldenummer: 97121146.1
(22) Anmeldetag: 02.12.1997
(51) Int. Cl.: B24B 13/06, B24B 47/16, B24B 41/04

(54) **Hochgeschwindigkeitsdrehmaschine zum Herstellen optisch aktiver Oberflächen**
High speed lathe for manufacturing optical active surfaces
Tour à grande vitesse pour la fabrication de surfaces optiques actives

(30) Priorität: 20.12.1996 DE 19653233
(43) Veröffentlichungstag der Anmeldung: 24.06.1998
(60) Teilanmeldung: 03003339.3
(73) Patentinhaber: Schneider GmbH + Co. KG, 35239 Steffenberg (DE)
(72) Erfinder: Schneider, Gunter, 35239 Steffenberg (DE); Krämer, Klaus, 35232 Dautphetal (DE)
(74) Vertreter: Thews, Gustav

(56) Entgegenhaltungen:
- EP-A- 0 420 244
- EP-A- 0 453 627
- WO-A-97/13603
- US-A- 4 343 206
- US-A- 5 220 749
- US-A- 5 485 771

## Beschreibung

Optisch aktive Oberflächen werden benötigt an Linsen, Hohlspiegeln, Prismen und ähnlichen optischen Produkten. Zur sprachlichen Vereinfachung wird nachfolgend im Zusammenhang mit optisch aktiven Oberflächen von 'Linsen' gesprochen. Gemeint sind unter diesem Begriff aber nach wie vor alle Oberflächen, die optisch aktiv sind.

Während Linsen aus härteren Materialien, wie z. B. mineralischen Gläsern, durch Schleifen hergestellt werden, können Linsen aus weicherem Material auch durch spanabnehmende Bearbeitungsvorgänge, z. B. auf Drehmaschinen, gefertigt werden.

Die vorliegende Erfindung bezieht sich auf eine Hochgeschwindigkeits-Drehmaschine zum Herstellen von Linsen im wesentlichen aus Kunststoff mit beliebiger Krümmung und Formgebung der Oberflächen einschließlich der Randbearbeitung. Die bisherigen Drehmaschinen zum Herstellen von Linsen aus Kunststoff verfügen über eine Spindel, die das Werkstück aufnimmt und in Drehung versetzt, während das Werkzeug (ein Drehmeisel) von zwei getrennten Antrieben linear in zwei Achsen bewegt wird. Dabei verläuft die eine Bewegungsrichtung senkrecht zur Achse der Spindel, die andere dagegen parallel zur Achse der Spindel.

Eine gattungsgemäße Maschine ist z.B. aus der US-A-4 343 206 bekannt.

**Merkmale der bisher benutzten Drehmaschinen sind wie folgt:**
1. NC-Maschinen mit konventionellen Antrieben für die Herstellung rotationssysmmetrischer Linsen
   - Die Bewegungen des Werkzeugs sind nur langsam, bezogen auf die Umfangsgeschwindigkeit des Werkstücks.
   - Das Werkzeug führt pro Umdrehung der Spindel eine stetige Bewegung aus, d. h. bezogen auf die einzelne Spindelumdrehung, findet in der Werkzeugbewegung kein Richtungswechsel statt.
2. Drehmaschinen mit Linearmotor für die Metallbearbeitung
   - In der Metallbearbeitung bekannt gewordene Drehmaschinen mit Linearmotoren werden nur für die sogenannte Unrundbearbeitung eingesetzt, d. h., daß die Werkstücke an ihrem äußeren Umfang bearbeitet werden. Hierbei wird üblicherweise jeweils ein längeres Teilstück an dem bearbeiteten Werkstück mit gleichem Querschnitt hergestellt. Daraus resultiert, daß für zahlreiche aufeinander folgende Umdrehungen des Werkstücks mit dem gleichen Datensatz für den Vorschubantrieb des Werkzeugschlittens gearbeitet werden kann, da dieses auch aufeinander folgend die gleichen Bewegungen ausführt. Ein weiteres Merkmal beim Unrundbearbeiten besteht darin, daß die Umfangsgeschwindigkeit und damit die Schnittgeschwindigkeit abgesehen von den hergestellten Ovalitäten in etwa konstant bleibt. Die verwendeten Asynchron-Linearmotore haben darüber hinaus eine hohe Wärmeentwicklung, was zu Ungenauigkeiten in Folge von unerwünschten Wärmedehnungen führt. Sie haben nur eine geringe Dynamik und kleine Haltekräfte insbesondere im Stillstand.

Aus dem vorgenannten ergibt sich, daß mit den Drehmaschinen entsprechend 1. nur die üblichen drehsymmetrischen Linsen hergestellt werden können, bei denen alle Oberflächenelemente, die den gleichen Abstand von der Rotationsachse haben, die gleiche Krümmung aufweisen. Die schnellen Oszillationsbewegungen des Werkzeugschlittens, die zur Herstellung nicht rotationssymmetrischer Linsen nötig sind, können diese Maschinen konstruktionsbedingt nicht ausführen. Die Drehmaschinen entsprechend 2. sind für die Linsenherstellung nicht geeignet, da das Material hier am Umfang bearbeitet wird, während es bei der Linsenherstellung auf der Stirnseite bearbeitet werden muß, woraus sich völlig andere Problemstellungen ergeben. Die bisher bekannt gewordenen Drehmaschinen sind demnach nicht geeignet zum Herstellen von Linsen mit beliebig, d. h. nicht drehsymmetrisch gestalteten Oberflächen.

Es gibt jedoch einen erheblichen Bedarf an Linsen, die nicht drehsymmetrisch sind, bei denen also die Oberflächenelemente auf beliebigen zur Rotationsachse konzentrischen Kreisen unterschiedliche Krümmungen und Neigungen im Verlauf des jeweiligen Kreises haben. Ein typisches Anwendungsbeispiel für solche Linsen gibt es in der Brillenindustrie. Es werden Brillengläser mit torus-artigen Oberflächen, oft mit zusätzlichen Krümmungen oder auch anderen Freiformflächen zum stufenlosen Sehen zwischen Fern und Nah benötigt. Entsprechend der unterschiedlichen Aufgabenstellung weist das Brillenglas in mehreren Bereichen eine unterschiedliche Krümmung auf. Eine Herstellung durch drehende Bearbeitung ist heute nicht möglich. Die vorliegende Erfindung bezieht sich auf eine Hochgeschwindigkeits-Drehmaschine zur Herstellung solcher oder ähnlicher Linsen.

Die erfindungsgemäße Hochgeschwindigkeits-Drehmaschine verfügt über eine angetriebene Werkstückspindel, die das Werkstück trägt, und deren Rotation von einer Elektronik überwacht und gesteuert wird (C-Achse). Desweiteren ist ein Werkzeugschlitten vorhanden, der das Werkzeug trägt und radial und axial zu der Werkstückspindel bewegt werden kann, wobei auch diese Bewegungen elektronisch über wacht und gesteuert werden (X-Achse und Z-Achse). Alle drei Achsen werden elektronisch miteinander verknüpft, d. h. die Bewegungen der C-Achse, X-Achse und Z-Achse hängen voneinander ab und werden so verknüpft, daß die gewünschte Linsenkontur entsteht.

Die Drehbewegung der C-Achse wird in allen Parametern von der genannten elektronischen Steuerung und Regelung kontrolliert. Hierzu gehören z. B. die Anzahl der Umdrehungen ab Start, der Phasenwinkel und die Drehzahl. Die C-Achse wird unter anderem so angesteuert, daß die Drehzahl der Werkstückspindel ansteigt, wenn das Werkzeug radiale Bewegungen in der X-Achse, Richtung Rotationsachse der Werkstückspindel (C-Achse), ausführt. So bleibt die Schnittgeschwindigkeit (Relativgeschwindigkeit zwischen Werkzeug und Werkstück) wie erwünscht konstant. Diese Steigerung der Drehzahl wird kurz vor Erreichen der Rotationsachse des Werkstücks abgebrochen und von da an mit konstanter, hoher Drehzahl weitergearbeitet. Dies ist erforderlich, da sonst in der Nähe der Rotationsachse, wo der Drehradius sehr klein ist bzw. im Grenzfall gleich Null wird, die Drehzahl sehr groß bzw. unendlich würde.

Mit der genannten Drehzahlsteuerung wird erreicht, daß die Schnittgeschwindigkeit (Bahngeschwindigkeit) annähernd gleich groß ist, unabhängig davon, auf welchem Radius des Werkstücks die Bearbeitung mit dem Werkzeug gerade stattfindet, solange es sich nicht in Nähe der Rotationsachse befindet. Die Begrenzung der maximalen möglichen Drehzahl sorgt dafür, daß bei Bearbeitung in Nähe der Rotationsachse des Werkstücks (C-Achse) keine unzulässig hohen Drehzahlen auftreten. Dies ist insbesondere auch im Hinblick auf die Bewegungen der mit der C-Achse verknüpften Z-Achse wichtig, deren Schwingfrequenz nach oben hin begrenzt ist.

Während der Bewegung des Werkzeugs in radialer Richtung, das heißt in Richtung der X-Achse, wird es gleichzeitig axial, in Richtung der Z-Achse, bewegt und so die gewünscht Kontur erzeugt. Wollte man sphärische Linsen erzeugen, so wäre die Bewegung in der Z-Achse stetig, das heißt es würde kein Richtungswechsel stattfinden: Da aber asphärische Linsen aller Art und insbesondere torische Linsen (auch Brillengläser für Mehrbereichsehen) hergestellt werden sollen, muß die Werkzeugbewegung in derZ-Achse sehrviel komplexer sein. Insbesondere muß sie mit den beiden anderen Maschinenachsen (C- und X-Achse) verknüpft werden. Zum Herstellen einertorischen Linse z. B. sind während einer einzigen Umdrehung der Werkstückspindel um die C-Achse mehrere Richtungswechsel des Werkzeugs in der Z-Achse nötig, d. h. der Werkzeugschlitten mit der Werkzeugspindel führt oszillierende Bewegungen aus, deren Bewegungsablauf sehr genau mit demjenigen der beiden anderen Achsen koordiniert sein muß.

Die Schneidkante des Werkzeugs muß gegen Ende der Bearbeitung exakt durch die Mitte der Linse (Rotationsachse) hindurchlaufen und dann mit umgekehrter Ansteuerung der Z-Achse noch ein Stück über die Mitte hinauslaufen, um dann mit kleinem Gradienten in homogener Bewegung in Z-Richtung von dem Werkstück abzuheben. Diese Art der Mittenbearbeitung ist nötig, damit auch die besonders wichtige Linsenmitte optisch einwandfrei, d. h. mit größter mechanischer Präzision hergestellt werden kann.

Das Bearbeitungswerkzeug führt bei der erfindungsgemäßen Maschine demnach mindestens in einer Bewegungsrichtung schnelle oszillierende Bewegungen aus und wird dabei von einem hochdynamischen Linearmotor angetrieben. Wenn das Werkzeug z. B. in axialer Richtung (Z-Achse) schnelle aber kontrollierte Oszillationsbewegungen ausführt, während es in radialer Richtung (X-Achse) gleichförmig vorwärts bewegt wird und die Bewegungen der drei Achsen miteinander koordiniert sind, so lassen sich damit Linsen herstellen, bei denen die Krümmung und Neigung der Oberflächenelemente auf beliebigen zur Rotationsachse der Spindel konzentrischen Kreisen in Abhängigkeit vom Drehwinkel unterschiedliche Werte aufweisen, wenn man dem Verlauf des jeweiligen Kreises folgt. Dies bedeutet, daß Linsen mit beliebiger Oberflächenkontur hergestellt werden können.

Wenn das Werkzeug angetrieben von einem hochdynamischen Linearmotor auch in der X-Achse Oszillationsbewegungen ausführt, so lassen sich mit der entsprechend ausgerüsteten Maschine auch Linsen herstellen, deren äußerer Umfang nicht kreisförmig, sondern beliebig gestaltet ist. Eine wichtige Anwendung hierfür ist das Anpassen von Brillengläsern an die Form des Brillengestells. Die Gläser müssen in diesem Fall an ihrem äußeren Umfang mehr oder weniger stark von der Kreisform abweichen. Diese brillenspezifischen Formen müssen in zunehmenden Maße bereits beim Linsenhersteller gefertigt werden. Hierzu gehört auch das Brechen der Kanten (Anfasen) und das Anbringen von umlaufenden Stegen am Linsenumfang zurAufnahme im Brillengestell.

Das Problem bei der Konstruktion einer solcher Hochgeschwindigkeits-Drehmaschine besteht darin, den Werkzeugschlitten mit dem Bearbeitungswerkzeug in stetigem Wechsel, d. h. oszillierend so zu beschleunigen, daß das Bearbeitungswerkzeug mit höchster Präzision die vorgegebene Position einnimmt. Diese Positionen des Werkzeugs in Abhängigkeit vom Drehwinkel der Spindel müssen ohne Überschwingen oder Nachschwingen erreicht werden. Insbesondere bei starken Krümmungsänderungen in Abhängigkeit vom Drehwinkel der Spindel können hierbei ganz erhebliche Beschleunigungskräfte auftreten. Hinzu kommt, daß bei jeder neuen Umdrehung der Werkstückspindel ein neuer Bewegungsablauf des Werkzeugschlittens erforderlich ist und die Bewegung aller drei Achsen (C-, X-undZ-Achse) koordiniert mit den beiden anderen ablaufen muß.

Die bisher gebräuchlichen Antriebe der Werkzeugschlitten sind ohne Ausnahme nicht in der Lage die erforderlichen Beschleunigungswerte aufzubringen und arbeiten außerdem nicht mit der nötigen Präzision. Ein Grund für diese Mängel besteht darin, daß die bisher üblichen Antriebe der Werkzeugschlitten überwiegend darauf beruhen, daß die Drehbewegung von Elektromotoren durch geeignete mechanische Zwischenglieder in Linearbewegungen umgesetzt wird. Ein rascher Wechsel der Linearbewegüng hätte bei diesen Systemen daher auch ein Wechsel in der Drehrichtung der Antriebsmotore zur Folge. Solche Drehrichtungswechsel lassen sich jedoch nur relativ langsam ausführen, da schnell laufende Elektromotoren sehr viel kinetische Energie gespeichert haben, die zunächst auf Null abgebremst werden muß, bevordie Drehrichtung umgekehrt werden kann. Hierfür ist Zeit erforderlich, ebenso wie für den nachfolgenden Wiederanlauf des Motors in entgegengesetzter Richtung. Ein spontaner Wechsel der Bewegungsrichtung des Werkzeugschlittens ist damit nicht durchzuführen.

Auch die bisher bei Werkzeugmaschinen für die Metallbearbeitung bekannt gewordenen Asynchron-Linearmotoren eignen sich nicht für die stirnseitige Materialbearbeitung zum Herstellen von nicht rotationssymmetrischen Linsen. Sie haben eine zu große Wärmeentwicklung, was bei der Anwendung im optischen Bereich zu nicht vertretbaren Ungenauigkeiten in Folge von Wärmedehnungen führt, außerdem sind sie zu langsam, d.h. sie verfügen nicht über die nötige Dynamik und die Haltekräfte insbesondere im Stillstand sind zu gering.

Zur Vermeidung der vorgenannten Schwierigkeiten wird erfindungsgemäß auf den Einsatz von Elektromotoren mit rotierenden Teilen und auf Asynchron-Linearmotore verzichtet. Zum Einsatz kommen hingegen hochdynamische Linearmotore mit geringer Wärmeentwicklung, wie z. B. Synchron-Drehstrom-Linarmotore zum Antrieb des Werkzeugschlittens für mindestens eine Bewegungsrichtung. Bei Synchron-Drehstrom-Linearmotoren wird das mit Dauermagneten bestückte Sekundärteil von elektromagnetischen Wechselfeldern direkt in translatorische, d. h. in lineare Bewegung versetzt.

Rotierende Teile sind nicht vorhanden. Wenn die Spulen zur Erzeugung der elektrischen Wanderfelder im Primärteil der Linearmotore von einer modernen Elektronik angesteuert werden, so kann das Sekundärteil des Linearmotors präzise und mit sehr hohen Beschleunigungen in die gewünschte Position gefahren werden.

Linearmotore als Antriebe für den Werkzeugschlitten von Drehmaschinen haben folgende Vorteile:
- Wegen fehlender rotierenderTeile und der geringen Masse des Sekundärteils des Linearmotors können gute Beschleunigungswerte erreicht werden, wodurch schnelle Lagewechsel des Werkzeugschlittens und damit des Werkzeugs möglich sind.
- Da mechanische mit Spiel behaftete Zwischenglieder, wie Spindeln, Kupplungen etc. entfallen, wird die Präzision, mit der die Steuerelektronik den Linearmotor ansteuert und dieser sich bewegt, direkt am Werkzeug wirksam.

Hochdynamische Linearmotore wie z. B. Synchron-Drehstrom-Linearmotore haben noch die zusätzlichen Vorteile:
- höchste Dynamik d. h. oszillierende Bewegungen mit mindestens 100 Hz sind möglich, wobei Positioniergenauigkeiten erreicht werden, die im Nanometer-Bereich liegen.
- nur eine sehr geringe Wärmeentwicklung tritt auf, da das Sekundärteil nicht wie beim Asynchron-Motor durch Induktion (= Wärmeentwicklung) angetrieben wird, sondern über moderne Dauermagnete verfügt.
- sehr große Haltekräfte insbesondere auch im Stillstand werden erreicht, was ebenfalls mit den genannten Dauermagneten zusammenhängt.

Die erfindungsgemäße Hochgeschwindigkeits-Drehmaschinezum Herstellen von optisch aktiven Oberflächen beliebiger Form an Linsen, Hohlspiegeln und anderen optischen Bauteilen hat typischerweise eine motorisch angetriebene, rotierende Spindel mit senkrechter Achse (C-Achse) zur Aufnahme des Werkstücks und einen Werkzeugschlitten mit mindestens zwei Linearführungen, der zur Aufnahme der Werkzeuge dient. Mittels dieser Linearführungen kann der Werkzeugschlitten sowohl in axialer Richtung (Z-Achse) als auch in radialer Richtung (X-Achse), bezogen auf die Spindelachse (C-Achse), bewegtwerden. Diese beiden Bewegungen können unabhängig voneinander ausgeführt werden. Zum Antrieb in mindestens einer Richtung ist ein hochdynamischer Linearmotor vorgesehen, z. B. ein Synchron-Drehstrom-Linearmotor. Es können jedoch auch zwei Linearmotore dieser Art zum Einsatz kommen.

Der Werkzeugschlitten ist so ausgeführt, daß er mehrere Werkzeuge (z. B. Drehmeisel, Polierwerkzeug) aufnehmen kann, die für die verschiedenen Bearbeitungsgänge nacheinander eingesetzt werden. Typischerweise kommt zunächst ein spezieller Diamant-Drehmeisel zum Einsatz, der die Oberfläche zunächst so bearbeitet, daß sie polierfähig ist. Ein zweites Werkzeug, das seitlich versetzt angeordnet ist, bringt anschließend die Fase am Umfang der Linse an. Es kann jedoch auch der Rand der Linse komplett bearbeitet werden, wobei eine beliebige Kontur möglich ist. Wenn die grundsätzliche Form der Linse hergestellt ist, wird die Oberfläche durch Polieren nachbearbeitet, so daß die gewünschte optisch aktive Oberfläche entsteht. Für den genannten Arbeitsgang Polieren kann ein angetriebenes (rotierendes) oder nicht angetriebenes Werkzeug benutzt werden. In jedem Fall ist das Polierwekrzeug an dem Werkzeugschlitten befestigt und führt ähnliche Bewegungen durch, wie der vorgenannte Drehmeisel.

Die hohe Dynamik der genannten Linearmotore gestattet es, den Werkzeugschlitten mit hohen Beschleunigungswerten so zu bewegen, daß er während einer einzigen Umdrehung der Werkstückspindel mehrfach die Richtung der Vorschubbewegung ändert. Es lassen sich damit optisch aktive Oberflächen mit nahezu jeder gewünschten Geometrie herstellen. So können z. B. beliebig gekrümmte Brillengläser gefertigt werden, ohne daß zwischen der Bearbeitung mit dem Diamant-Drehmeisel und dem Polieren weitere Feinschleifoperationen notwendig sind.

Die Vorteile der erfindungsgemäßen Hochgeschwindigkeits-Drehmaschine sind wie folgt:
- Es ist möglich, nahezu beliebige optisch aktive Oberflächen herzustellen, ohne daß das Werkstück umgespannt werden muß, was die Genauigkeit erhöht.
- Durch die erweiterten Fertigungsmöglichkeiten, z: B. bei der Herstellung von bifokalen, torus-artigen oder auch anderen beliebig gekrümmten Brillengläsern, können Arbeitsschritte entfallen, die bisher zum Anarbeiten der unterschiedlichen Oberflächen nötig waren. Dadurch werden die Kosten reduziert.
- Durch die außerordentlich präzise Führung des Werkzeugschlittens können Arbeitsgänge entfallen, die sonst vor dem Polieren nötig sind, damit eine genügend gute Oberflächenqualität erreicht wird. Zum Herstellen eines Brillenglases genügt nun eine Feinst-Drehbearbeitung (polierfähige Qualität) mit anschließender Randbearbeitung, danach erfolgt die Kurz-Politur.
- Da der Linearmotor ohne drehende Teile auskommt, ist der Verschleiß der erfindungsgemäßen Hochgeschwindigkeits-Drehmaschine geringer als bei üblichen Drehmaschinen. Der Wartungsaufwand reduziert sich.
- Da der Werkzeugschlitten mit mehreren Werkzeugen ausgerüstet wird, können Arbeitsgänge auf nachgeschalteten Maschinen entfallen. In einer Aufspannung des Werkstückes wird die polierfähige Oberfläche mit einem Werkzeug hergestellt, während anschließend mit einem zweiten Werkzeug die Randbearbeitung durchgeführt wird. Mit einem dritten Werkzeug wird danach die Oberfläche poliert. Weitere Kosteneinsparungen sind die Folge.

Die erfindungsgemäße Hochgeschwindigkeits-Drehmaschine hat typischerweise für die Werkstückspindel einen Drehzahlbereich von ca. 750 U/min bis 3.000 U/min und arbeitet mit nahezu konstanter Schnittgeschwindigkeit (Bahngeschwindigkeit) über einen weiten Bereich des Drehradius durch Nachregeln der Drehzahl. In der Nähe der Rotationsachse wird die Drehzahl begrenzt. Die Maschine kann jedoch auch mit anderen Drehzahlen betrieben werden. Von einem oder mehreren Linearmotoren angetrieben kann der Werkzeugschlitten mehrere Oszillationen (in der X- und/oder Z-Achse) pro Umdrehung der Werkstückspindel (C-Achse) ausführen. Eine Oszillation bedeutet dabei eine Vorschubbewegung mit Richtungsumkehr. Umgerechnet ergibt sich aus dem genannten Drehzahlbereich und angenommenen zwei Oszillationen pro Umdrehung eine Frequenz von 25 bis 100 Hz, mit der der Werkzeugschlitten hin- und herschwingen muß. Es sind jedoch auch andere Frequenzen möglich.

Zum Ausgleich der auftretenden freien Massenkräfte, die durch die Bewegung des Sekundärteils des Linearmotors und dem angehängtem Werkzeugschlitten einschließlich Werkzeug entstehen, kann es zweckmäßig sein, spezielle Ausgleichsvorrichtungen vorzusehen. Bei einer solchen Vorrichtung kann z. B. eine gleich große Masse in entgegengesetzter Richtung mit gleicher Frequenz in Schwingung versetzt werden. Die Massenkräfte heben sich in diesem Falle auf.

Normalerweise ist das Lage-Meßsystem, das die genaue Lage der linear bewegten Teile erfaßt, in den Linearmotor integriert. Es kann jedoch auch sinnvoll sein, das Meßsystem an dem Werkzeugschlitten anzuordnen. Dadurch wird sichergestellt, daß die genaue Lage des Werkzeugschlittens auch dann gewährleistet ist, wenn andere Teile der Maschine Bewegungen (z. B. Schwingungsbewegungen) ausführen.

Das Lage-Meßsystem wird so gewählt, daß es mit absoluter Messung arbeitet, wodurch die Position des Werkzeugschlittens immer bekannt ist. Vorteilhafterweise wird hierfür ein absolut messender Glasstab mit eingeätzter Skala benutzt.

Bei der erfindungsgemäßen Hochgeschwindigkeits-Drehmaschine für optisch aktive Oberflächen wird das Sekundärteil des Linearmotors vorzugsweise mit einem U-förmigen Querschnitt ausgebildet. Dadurch erhält das Sekundärteil des Linearmotors eine besonders hohe Steifigkeit und außerdem ergibt sich hierdurch die Möglichkeit, an den beiden seitlichen Flächen des U-förmigen Sekundärteils des Linearmotors das beidseitig vorgesehene lineare Führungssystem anzubringen. Für diese Linearführung des Sekundärteils des Linearmotors mit dem angehängten Werkzeugschlitten und dem Werkzeug werden vorzugsweise vorgespannte lineare Kugelumlaufführungen oder Rollenumlaufführungen vorgesehen. Es können jedoch auch andere Führungssysteme eingesetzt werden.

An dem Werkzeugschlitten können anstelle der vorher erwähnten Diamant-Drehmeisel für die verschiedenen Bearbeitungen auch Schneidköpfe mit einem Schnellwechselsystem befestigt werden, die es gestatten, beliebige Schneidköpfe in schneller Folge einzusetzen. Gleichermaßen können auf dem Werkzeugschlitten auch Werkzeugspindeln mit Antrieb montiert werden. Die erfindungsgemäße Maschine kann dann auch zum Fräsen bzw. zum Schleifen von Linsen aus härterem Material, z. B. Mineralglas, eingesetzt werden.

Die Hochleistungselektronik muß in der Lage sein, bei jeder neuen Umdrehung der Werkstückspindel (C-Achse) einen völlig neuen Datensatz für die Z- und ggf. auch für die X-Achse bereitzustellen. Bei einer angenommenen Drehzahl der Werkstückspindel von 3.000 U/min dauert eine Umdrehung 0,2 Sek. Wegen der Reaktionszeiten und der nötigen Regelvorgänge steht diese Zeit jedoch nicht zur Verfügung, sondern alle 4 ms muß ein neuer Datensatz bereitstehen.

Der hieraus resultierende sehr große Datenfluß erfordert Rechnerkapazitäten, die weit über das heute übliche hinausgehen.

Eine Ausführung der Hochgeschwindigkeits-Drehmaschine mit einem hochdynamischen Linearmotor für die Z-Achse und einem konventionellen Antrieb mit rotierendem Motor für die X-Achse wird nachstehend an einem Beispiel erläutert.

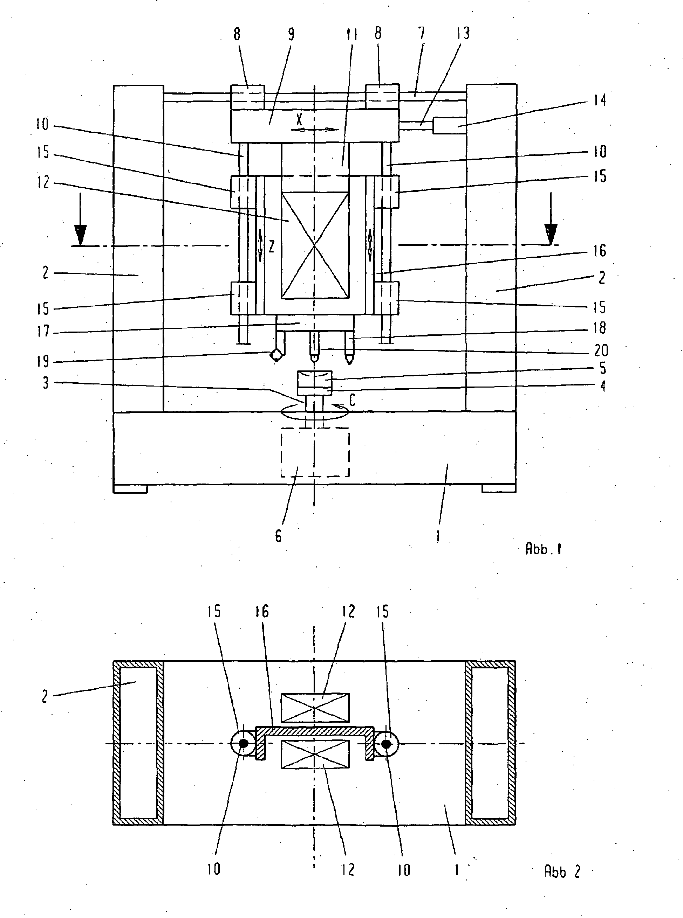

Abbildung 1 zeigt eine Ansicht der Maschine.
Abbildung 2 zeigt einen Querschnitt durch die Maschine.

*Anmerkung:* Die verschiedenen Möglichkeiten des Massenausgleichs wurden nicht dargestellt, ebenso nicht die zusätzlichen Bestückungsmöglichkeiten des Werkzeugschlittens (17). Alle Bewegungen der Maschine werden von einer Hochleistungselektronik gesteuert und geregelt. Die drei Maschinenachsen (C-, X- und Z-Achse) sind miteinander verknüpft.

Der Maschinenkörperbesteht aus einem unteren Maschinenbett (1), auf dem sich rechts und links zwei senkrechte Seitenteile (2) aufbauen. In dem Maschinenbett (1) ist die Werkstückspindel (3) gelagert, die an ihrem oberen Ende eine Aufnahme (4) für das Werkstück (5) aufweist. Die Werkstückspindel (3) wird von einem Elektromotor (6) angetrieben und kann wahlweise kontinuierlich umlaufen oder sie kann durch Achsumschaltung in eine gesteuerte Rundachse (C-Achse) verwandelt werden.

Die beiden Seitenteile (2) tragen an ihrem oberen Ende zwei waagrechte, hintereinander liegende Führungsrohre (7), auf denen die Kugelumlaufführungen (8) laufen. Diese ermöglichen die radiale Werkzeugbewegung (X-Achse) und tragen die Traverse (9). An der Traverse (9) ist rechts und links je ein Führungsrohr (10) befestigt und außerdem trägt es das Zwischenstück (11) zur Aufnahme des Primärteils (12) des Linearmotors mit den Statorwicklungen.

Die Traverse (9) ist außerdem mit einer Koppelstange (13) verbunden, die die Verbindung zu einem konventionellen Vorschubantrieb (14) herstellt. Mit diesem konventionellen Vorschubantrieb (14) wird die radiale Werkzeugzustellung (in horizontaler Richtung) angetrieben (X-Achse).

Auf den vertikalen Führungsrohren (10) laufen rechts und links je zwei Kugelumlaufführungen (15), die ihrerseits den beweglichen Sekundärteil (16) des Linearmotors tragen und damit die axiale Bewegung ermöglichen (Z-Achse). An dem Sekundärteil (16) des Linearmotors ist der Werkzeugschlitten (17) befestigt, der im dargestellten Beispiel drei Werkzeuge trägt. Das rechte Werkzeug (18) dient zum Bearbeiten, der Kontur des Werkstücks (5), während das linke Werkzeug (19) zum Anarbeiten von Fasen am Werkstück (5) dient. Das mittlere Werkzeug (20) ist das Polierwerkzeug.

Die Funktion der Maschine ist wie folgt:

Das Werkstück (5) wird mittels Werkstückspindel (3) in schnelle Umdrehung versetzt. Anschließend wird der Werkzeugschlitten (17) mittels Sekundärteil (16) des Linearmotors in der Z-Achse soweit vertikal nach unten gefahren und mittels konventionellem Vorschubantrieb (14) in der X-Achse soweit horizontal verfahren, daß die Spitze des Werkzeuges (18) den äußeren Rand des Werkstückes (5) gerade berührt. Während anschließend der Vorschubantrieb (14) für eine gleichmäßige Vorschubbewegung von Werkzeugschlitten (17) und Werkzeug (18) in horizontaler, d. h. radialer Richtung sorgt (X-Achse), wird der Werkzeugschlitten (17) mit dem Werkzeug (18) von dem Sekundärteil (16) des Linearmotors in vertikaler d. h. axialer Richtung (Z-Achse) oszillierend so bewegt, daß die gewünschte Kontur am Werkstück (5) entsteht. Dieser Arbeitsgang kann - falls erforderlich - anschließend mit hoher Schnittgeschwindigkeit bei sehr kleinen Zustellbewegungen in der X-Achse wiederholt werden, um die gewünschte Oberflächenqualität zu erreichen. Anschließend wird die Linse mit Werkzeug (19) am Umfang bearbeitet und mit Werkzeug (20) poliert. Alle Bewegungen in den drei Achsen sind miteinander verknüpft, d. h. sie hängen voneinander ab.

### Bezugszeichenliste

- 1: Maschinenbett
- 2: Seitenteil
- 3: Werkstückspindel
- 4: Werkstückaufnahme
- 5: Werkstück
- 7: Führungsrohr
- 8: Kugelumlaufführung
- 9: Traverse
- 10: Führungsrohr
- 11: Zwischenstück
- 12: Primärteil
- 13: Koppelstange
- 14: Vorschubantrieb
- 15: Kugelumlaufführungen
- 16: Sekundärteil
- 17: Werkzeugschlitten
- 18: Werkzeug
- 19: Werkzeug
- 20: Werkzeug

## Patentansprüche

1. Hochgeschwindigkeits-Drehmaschine zum Herstellen von Linsen und anderen Körpern mit optisch aktiven, eine beliebige Krümmung oder Form aufweisenden Oberflächen, mit einer Werkstückspindel (3) (C-Achse), an der mittels einer Werkstückaufnahme (4) das Werkstück (5) befestigt wird, mit einer Elektronik für die Überwachung und Steuerung der Rotation der Werkstückspindel (3) (C-Achse), mit einem Werkzeugschlitten (17), der in radialer Richtung (X-Achse) und axialer Richtung (Z-Achse), bezogen auf die Werkstückspindel (3), bewegt werden kann, wobei für die axiale Bewegung des Werkzeugschlittens (17), d.h. in der Z-Achse, ein Linearmotor eingesetzt ist, mit einer über eine Hochleistungselektronik verfügenden Steuerung und Lageregelung für die X- und die Z-Achse, wobei die Steuerung und Lageregelung für jede Spindelumdrehung einen neuen Datensatz für den Antrieb des Werkzeugschlittens (17) zur Verfügung stellt, so dass die drei Achsen elektronisch miteinander Verknüpft sind, **dadurch gekennzeichnet, dass** die C-Achse der Werkstückspindel (3) drehzahl- und phasengeregelt ist und dass der Linearmotor oszillierende Hübe mit einer Frequenz von mindestens 100 Hz ausführen kann.

2. Maschine zum Herstellen von Linsen und anderen Körpern mit optisch aktiven Oberflächen nach Anspruch 1 **dadurch gekennzeichnet, daß** durch Ansteuern der C-Achse die Drehzahl der Werkstückspindel ansteigt, wenn das Werkzeug radiale Bewegungen in der X-Achse, Richtung Rotationsachse der Werkstückspindel (C-Achse), ausführt, so daß die Schnittgeschwindigkeit konstant bleibt und diese Veränderung der Drehzahl kurz vor Erreichen der Linsenmitte abgebrochen wird und von da an mit konstanter Drehzahl weitergearbeitet wird, wobei anschließend die Schneidkante des Werkzeugs exakt durch die Linsenmitte hindurch läuft und dann mit umgekehrterAnsteuerung derZ-Achse noch ein Stück über die Linsenmitte hinausläuft, um dann mit kleinem Gradienten in homogener Bewegung in Z-Richtung von dem Werkstück abzuheben.

3. Maschine zum Herstellen von Linsen und anderen Körpern mit optisch aktiven Oberflächen nach Anspruch 1 oder 2 **dadurch gekennzeichnet, daß** das Sekundärteil (16) des Linearmotors einen U-förmigen Querschnitt hat.

4. Maschine zum Herstellen von Linsen und anderen Körpern mit optisch aktiven Oberflächen nach Anspruch 1 bis 3 **dadurch gekennzeichnet, daß** sowohl für die radiale Bewegung des Werkzeugschlittens (17), als auch für seine axiale Bewegung Kugelumlaufführungen (8) mit Führungsrohren (7) bzw. Kugelumlaufführungen (15) mit Führungsrohren (10) vorgesehen sind.

5. Maschine zum Herstellen von Linsen und anderen Körpern mit optisch aktiven Oberflächen nach Anspruch 1 bis **4 dadurch gekennzeichnet, daß** zum Positionieren des Werkzeugschlittens (17) ein Lagemeßsystem mit absoluter Messung vorgesehen wird und dieses Lagemeßsystem integrierter Bestandteil des Linearmotors ist.

6. Maschine zum Herstellen von Linsen und anderen Körpern mit optisch aktiven Oberflächen nach Anspruch 1 bis 4 **dadurch gekennzeichnet, daß** das Lagemeßsystem mit absoluter Messung nicht im Linearmotor, sondern als gesondertes Maschinenteil im Bereich des Werkzeugschlittens (17) angeordnet ist.

7. Maschine zum Herstellen von Linsen und anderen Körpern mit optisch aktiven Oberflächen nach Anspruch 1 bis 6 **dadurch gekennzeichnet, daß** der Werkzeugschlitten (17) mehrere Werkzeuge gleichzeitig trägt.

8. Maschine zum Herstellen von Linsen und anderen Körpern mit optisch aktiven Oberflächen nach Anspruch 1 bis 7 **dadurch gekennzeichnet, daß** der Werkzeugschlitten (17) Schneidköpfe mit Schnellwechselsystem trägt.

9. Maschine zum Herstellen von Linsen und anderen Körpern mit optisch aktiven Oberflächen nach Anspruch 1 bis 8 **dadurch gekennzeichnet, daß** der Werkzeugschlitten (17) mindestens eine angetrie-bene Spindel trägt, die drehende Werkzeuge aufnehmen kann.

10. Maschine zum Herstellen von Linsen und anderen Körpern mit optisch aktiven Oberflächen nach Anspruch 1 bis 9 **dadurch gekennzeichnet, daß** zum Massenausgleich des Sekundärteils (16) des Linearmotors mit dem angehängten Werkzeugschlitten (17) und den entsprechenden Werkzeugen (18), (19) und (20), eine zweite gleich große entgegengesetzt schwingende Masse verwendet wird.

11. Maschine zum Herstellen von Linsen und anderen Körpern mit optisch aktiven Oberflächen nach Anspruch 1 bis 10 **dadurch gekennzeichnet, daß** für den Masseausgleich eines jeden Linearmotors zu diesem koaxial angeordnet ein zweiter Linearmotor eingesetzt wird, dessen Sekundärteil elektrisch so angesteuert wird, daß er genau die entgegengesetzte Bewegung des ersten Linearmotors ausführt und seine bewegten Massen genau so groß sind, wie diejenigen des ersten Linearmotors.

## Claims

1. High-speed turning lathe for producing lenses and other bodies with optically active surfaces having a desired curvature or form, the machine possessing a workpiece spindle (3) (C axis) on which the workpiece (5) is mounted by means of a workpiece holder (4), electronics for controlling the rotation of the workpiece spindle (3) (C-Achse) and also possessing a tool carriage (17) that can be moved in the radial direction (X axis) and axial direction (Z axis) with respect to the workpiece spindle (3), a linear motor with a control system possessing high-performance electronics and with positioning control for the X and Z axes being used for the axial motion i.e. motion in the Z axis of the tool carriage (17), the control system and the positioning control furnishing a new data record for the drive to the tool carriage (17) for each revolution of the spindle so that the three axes are electronically interlinked, **characterized in that** the C axis of the workpiece spindle is speed-controlled and phase-controlled and **in that** the linear motor is capable of performing oscillating strokes with a frequency of at least 100 Hz.

2. Machine for producing lenses and other bodies with optically active surfaces according to Claim 1, **characterized in that** the speed of the workpiece spindle is increased by driving the C axis so that the cutting speed remains constant when the tool executes radial movements in the X axis towards the rotational axis of the tool spindle (C axis), and this change in speed is terminated shortly before the centre of the lens is reached and machining proceeds from there on at constant speed, the cutting edge of the tool running exactly through the centre of the lens and then, with reversed drive to the Z axis, continuing to run some way beyond the centre of the lens, after which it is lifted off the workpiece in the Z direction with a small gradient and a homogeneous motion.

3. Machine for producing lenses and other bodies with optically active surfaces according to Claim 1 or Claim 2, **characterized in that** the secondary part (16) of the linear motor has a U-shaped cross-section.

4. Machine for producing lenses and other bodies with optically active surfaces according to Claims 1 to 3, **characterized in that** linear guidance systems (8 and 15 respectively) with recirculating linear ball-bearings, guided on tubes (7 and 10 respectively), are provided for both the radial motion and the axial motion of the tool carriage (17),

5. Machine for producing lenses and other bodies with optically active surfaces according to Claims 1 to 4, **characterized in that** a position measuring system with absolute measurement is provided for the positioning of the tool carriage (17), and this position measuring system is an integral part of the linear motor.

6. Machine for producing lenses and other bodies with optically active surfaces according to Claims 1 to 4, **characterized in that** the position measuring system with absolute measurement is arranged not in the linear motor, but as a separate machine part in the region of the tool carriage (17).

7. Machine for producing lenses and other bodies with optically active surfaces according to Claims 1 to 6, **characterized in that** the tool carriage (17) carries a plurality of tools at the same time.

8. Machine for producing lenses and other bodies with optically active surfaces according to Claims 1 to 7, **characterized in that** the tool carriage (17) carries cutting heads with a quick-change system.

9. Machine for producing lenses and other bodies with optically active surfaces according to Claims 1 to 8, **characterized in that** the tool carriage (17) carries at least one driven spindle able to receive rotating tools.

10. Machine for producing lenses and other bodies with optically active surfaces according to Claims 1 to 9, **characterized in that,** to counterbalance the mass of the secondary part (16) of the linear motor together with the attached tool carriage (17) and corresponding tools (18), (19) and (20), a second and opposed oscillating mass of equal magnitude is used.

11. Machine for producing lenses and other bodies with optically active surfaces according to Claims 1 to 10, **characterized in that,** to counterbalance the mass of one linear motor, a second linear motor arranged coaxially with the first is used, its secondary part is electrically actuated so that it executes an exactly opposite motion to the first linear motor, and its moving masses are of exactly equal magnitude to those of the first linear motor.

## Revendications

1. Tour ultra-rapide pour la fabrication de lentilles et autres corps avec des surfaces optiquement actives, présentant une courbure ou une forme quelconque, qui dispose d'une tige de pièce (3) (axe C), sur laquelle la pièce (5) est fixée au moyen d'un logement de pièce (4), une électronique étant utilisée pour la contrôle et la commande de la rotation de tige de pièce (3) (axe C) et qui dispose en outre d'un coulisseau d'outil (17) qui peut être déplacé dans le sens radial (axe X) et dans le sens axial (axe Z) par rapport à la tige de la pièce (3), un moteur linéaire avec une commande et une régulation de position des axes X et Z disposant d'une électronique haute performance étant utilisé pour le déplacement axial du coulisseau d'outil (17), c'est-à-dire dans l'axe Z, la commande et la régulation de position pour chaque rotation de tige fournissant un nouveau jeu de données pour l'entraînement du coulisseau d'outil (17), de façon que les trois axes soient reliés entre eux électroniquement, **caractérisée en ce que** l'axe C de la tige d'outil est réglé en vitesse et en phase et que le moteur linéaire peut exécuter des courses oscillantes d'une fréquence d'au moins 100 Hz.

2. Machine pour la fabrication de lentilles et autres corps avec des surfaces actives optiquement selon la revendication 1, **caractérisée en ce que,** par la commande de l'axe C, la vitesse de rotation de la tige de la pièce augmente lorsque l'outil exécute des mouvements radiaux dans l'axe X, direction axe de rotation de la tige de la pièce, de sorte que la vitesse de coupe reste constante et que cette variation de la vitesse de rotation est réduite juste avant d'atteindre le milieu de la lentille et, de là, l'usinage est poursuivi à vitesse de rotation constante, le bord de coupe de l'outil traversant ensuite exactement le milieu de la lentille puis, avec une commande inverse de l'axe Z, dépassant encore un peu du milieu de la lentille, pour ensuite se soulever de la pièce avec de petits gradients d'un mouvement homogène dans la direction Z.

3. Machine pour la fabrication de lentilles et autres corps avec des surfaces actives optiquement selon la revendication 1 ou 2, **caractérisée en ce que** la partie secondaire (16) du moteur linéaire à une section en forme de U.

4. Machine pour la fabrication de lentilles et autres corps avec des surfaces actives optiquement selon les revendications 1 à 3, **caractérisée en ce qu'**il est prévu, tant pour le mouvement radial du coulisseau d'outil (17) que pour son mouvement axial, des guidages par douilles à billes (8) avec des tubes de guidage (7) et des guidages par douilles à billes (15) avec des tubes de guidage (10).

5. Machine pour la fabrication de lentilles et autres corps avec des surfaces actives optiquement selon les revendications 1 à 4, **caractérisée en ce que,** pour positionner le coulisseau d'outil (17), il est prévu un système de mesure de position avec mesure absolue et que ce système de mesure de position fait partie intégrante du moteur linéaire.

6. Machine pour la fabrication de lentilles et autres corps avec des surfaces actives optiquement selon les revendications 1 à 4, **caractérisée en ce que** le système de mesure de position avec mesure absolue n'est pas disposé dans le moteur linéaire, mais comme une pièce de machine séparée dans la zone du coulisseau d'outil (17).

7. Machine pour la fabrication de lentilles et autres corps avec des surfaces actives optiquement selon les revendications 1 à 6, **caractérisée en ce que** le coulisseau d'outil (17) porte simultanément plusieurs outils.

8. Machine pour la fabrication de lentilles et autres corps avec des.surfaces actives optiquement selon les revendications 1 à 7, **caractérisée en ce que** le coulisseau d'outil (17) porte des têtes de coupe avec un système de changement rapide.

9. Machine pour la fabrication de lentilles et autres corps avec des surfaces actives optiquement selon les revendications 1 à 8, **caractérisée en ce que** le coulisseau d'outil (17) porte au moins une tige commandée qui peut loger des outils rotatifs.

10. Machine pour la fabrication de lentilles et autres corps avec des surfaces actives optiquement selon les revendications 1 à 9, **caractérisée en ce que,** pour équilibrer les masses de la partie secondaire (16) du moteur linéaire avec le coulisseau d'outil (17) accroché et les outils correspondants (18), (19) et (20), on utilise une deuxième masse vibrante opposée d'égale grandeur.

11. Machine pour la fabrication de lentilles et autres corps avec des surfaces actives optiquement selon les revendications 1 à 10, **caractérisée en ce que**, pour équilibrer les masses d'un moteur linéaire, on utilise un deuxième moteur linéaire disposé de manière coaxiale au premier et dont la partie secondaire est commandée électriquement de façon qu'elle exécute exactement le mouvement opposé au premier moteur linéaire et que ses masses en mouvement soient exactement aussi grandes que celles du premier moteur linéaire.
